Europäisches Patentamt

European Patent Office

Office européen des brevets

(11) Publication number: **0 325 479**
**A2**

## (12) EUROPEAN PATENT APPLICATION

(21) Application number: **89300552.0**

(22) Date of filing: **20.01.89**

(51) Int. Cl.⁴: **A 23 L 1/164**
**A 23 L 1/20, A 23 L 1/04**

(30) Priority: **22.01.88 JP 13154/88**

(43) Date of publication of application:
**26.07.89 Bulletin 89/30**

(84) Designated Contracting States:
**AT BE CH DE ES FR GB GR IT LI LU NL SE**

(71) Applicant: **Takeda Chemical Industries, Ltd.**
**27, Doshomachi 2-chome Higashi-ku**
**Osaka-shi Osaka, 541 (JP)**

(72) Inventor: **Konno, Akira**
**284, Oaza-takahama Shimamoto-cho**
**Mishima-gun Osaka 618 (JP)**

**Iida, Atsu**
**13-23, Seimeidohri**
**Abeno-ku Osaka 545 (JP)**

(74) Representative: **Lewin, John Harvey et al**
**ELKINGTON AND FIFE Beacon House 113 Kingsway**
**London WC1V 6SH (GB)**

(54) Shaped granular cereal foods and production thereof.

(57) Shaped foods are produced by mixing a curdlan with granules of a cereal food, shaping the mixture and heating the shaped material for binding cereal grains or granules. The thus obtained shaped foods have superior texture and appearance.

EP 0 325 479 A2

## Description

### Shaped Granular Cereal Foods and Production Thereof

This invention relates to shaped foods prepared by mixing a curdlan to a granular cereal food, shaping the mixture and heating the shaped material.

Recently, the number of people who have meals in the so-called "one dinner and four snacks" manner is increasing. Thus, people who take meals in that manner have a dinner only once a day and, for the rest, have four snacks or light meals at pleasure depending on the extent to which they feel hungry, without sticking to any particular time and/or place as far as circumstances permit. Hand in hand with such tendency, various snack foods have come into the market. Some of them, called sheet foods or film foods, for instance, are very different in shape from the conventional snack foods.

Generally, snack foods should be characterized in that they are fashionable and can be eaten smartly at any time and at any place. Snack foods currently on the market are anyhow reflecting the endeavors made to make them have such characteristic features. As yet, however, few are satisfactory from the quality viewpoint. Thus, in the case of the conventional sheet foods, for instance, some are readily broken on the occasion of eating while others are too hard, hence difficult to eat. Moreover, such snack foods may be readily broken during carrying and this is unfavorable from the product appearance viewpoint.

Under these circumstances, the present inventors made intensive investigations in an attempt to make improvements in quality features, such as texture and appearance, of certain snack foods, namely snack foods produced by using granular cereal products as raw materials and, as a result, found that shaped foods obtained by adding a curdlan to a granular cereal food for binding cereal grains or granules have good quality features as snack foods. Further investigations based on this finding have now led to completion of the present invention.

Thus, the invention provides 1) a shaped food produced from a granular cereal food by shaping and binding with a curdlan and 2) a method of producing shaped foods which comprises adding a curdlan to a granular cereal food, shaping the mixture and heating the shaped material for binding cereal grains or granules.

The "curdlan" is a general name of thermo-gelable β-1,3-glucan type polysaccharides, which are produced by microorganisms such as strains of the genus Alcaligenes or Agrobacterium. Thus, more specifically, the curdlan produced by Alcaligenes faecalis var. myxogenes 10C3K [Agricultural and Biological Chemistry, vol. 30, page 196 (1966)], the curdlan produced by the mutant NTK-u (IFO 13140) of Alcaligenes faecalis var. myxogenes 10C3K (Japanese Patent Publication No. 32673/1973, U.S. Patent 3,822,250) and the curdlan produced by Agrobacterium radiobacter sp. (IFO 13127) and its mutant U-19 (IFO 13126)(Japanese Patent Publication No. 32674/1973, U.S. Patent 3,822,250), for instance, are usable. When cultivated in the conventional manner, generally under aerobic conditions, using, as nutrient sources, carbon sources, nitrogen sources, inorganics and so forth, such microorganisms produce a curdlan usable in the practice of the invention. The thus-produced curdlan can be recovered from the cultures generally by appropriately utilizing such means as dissolution, filtration, neutralization, washing with water, dehydration and drying. For instance, a culture broth containing a curdlan usable in the practice of the invention is supplemented with an alkali, such as an aqueous sodium hydroxide solution, the mixture is stirred to an extent sufficient for dissolution and then subjected to such treatment as centrifugation or filter press filtration using a filter aid, the thus-obtained clear and transparent filtrate is neutralized with an acid, such as hydrochloric acid, sulfuric acid or acetic acid, and the resulting gel-like precipitate is collected by centrifugation, washed with water and spray-dried to give the desired curdlan as a white or off-white powder.

The cereal food as so called herein includes foods prepared from cereals, seeds or stones, or pulse (as peas and beans) with the granular fraction accounting for the majority. The cereals are, for example, rice, barley, wheat, millet, foxtail millet and corn. The seeds or stones are, for example, sesame and peanuts, and the pulse are, for example, soybeans, adzuki beans, peas and broad beans. The grains or granules include the original granular forms of cereals, roughly ground forms thereof, and artificially processed grains or granules, such as artificial rice. The preferred size of granules is about 1-15 mm.

The cereal food to be shaped and bound with a curdlan by the method of the invention may be a cooked one or a raw one. In the latter case, the raw cereal food is cooked after binding and shaping, as necessary. Generally, the use of a cooked one is advantageous from the operational viewpoint and tends to give good quality products. Cereal grains or granules may be cooked in the conventional manner, for example by boiling, steaming, baking or microwave oven heating. In the case of rice, for instance, there may be mentioned boiled rice, steamed rice, expanded or popped rice, fried rice and, further, rice species seasoned and processed as desired, such as sushi rice, chaofan (fried rice with such ingredients as eggs, shrimps, etc.), chicken and rice fried and seasoned with tomato catsup, gomokumeshi (boiled rice mixed with such ingredients as chicken, fish, vegetables, etc.). They are usable when the majority of grains of rice remain unbroken.

In accordance with the invention, the cereal food is bound and shaped by mixing said food with a curdlan in the presence of water, shaping the mixture as desired, and heating. Curdlan is added generally in the form of a dispersion in water, a liquid seasoning or the like. When water is present on the cereal grain surface in an amount sufficient to wet and moisten curdlan, the it be added in the form of a powder. In that case, the curdlan should preferably be present in the form of an about 2-14, preferably 2-10% aqueous dispersion. Curdlan is used in an amount suitably selected depending on the food to which it is added, generally in an amount of 0.1-25% by weight, preferably in an amount of 0.2-10% by weight, more preferably in an amount of 0.3 - 5% by weight, based on the final product. For this purpose, usually about 10-100 parts by weight of said aqueous dispersion of curdlan is mixed with 100 parts by weight of granules of cereal food. When the addition level is lower than the above range, the product food has poor integrity and can be readily broken. When the addition level is higher than said range, the processability is poor in most cases. By adjusting this addition level, it is possible to adjust, as desired, the hardness or consistency of the desired product as well as the ease with which the cereal grains or granules get unbound.

After admixture such that curdlan is distributed over the cereal grain surface as uniformly as possible, the mixture is shaped. In this case, any shape which seem appropriate for the final product to serve as a snack food may be selected. The shape is preferable in a thickness of about 2 - 60mm. Thus, for instance, the shape may be sheet- or plate-like, bar- or rod-like, triangular or spherical, but is not limited to thereto. For this shaping, it is advantageous, from the operation viewpoint, to prepare a mold having the desired shape and size and fill the above mixture into said mold. Alternatively, it is also possible to shape the mixture into an intermediate product and, after the heat treatment to be mentioned later herein, cut the intermediate product to a desired shape and size. For instance, the method comprising shaping the mixture once into broad plates, heating the plates for binding cereal grains or granules and then cutting the plates to a desired size and shape may be employed.

The shapings are then heated for binding cereal grains or granules. This heating may be made by an appropriate method, such as direct heating, water bath heating, oil bath heating or heating under pressure, in a manner such that the shapings can be heated to a temperature above about 55°C, preferably above 70°C, more preferably above 80°C, whereby the binding of cereal grains or granules proceeds by the intermediary of curdlan. The use of microwave oven heating is also preferable. The heating time should suitably be selected depending on the size of the shapings. Usually, the preferable heating time is about 0.5 - 30 minutes. In this way, the cereal grains or granules are bound together by the binding action of a curdlan to give the shaped food according to the invention with a certain given shape and size.

The shaped food according to the invention may serve as a snack food either as such or in combination with one or more other food materials. For instance, the shapings obtained by binding and shaping fried rice into plates may serve as a kind of rice ball for easy eating or may be used in preparing "rice burger" by sandwiching meat patty, vegetables and/or the like between two pieces of the plate-like shaping.

The following examples illustrate the invention in further detail. A spray-dried powder of curdlan produced by the mutant NTK-u (IFO 13140) of Alcaligenes faecalis var. myxogenes 10C3K in each Example.

Example 1

In 13 ml of water was dispersed 0.5 g of the curdlan powder, and the aqueous dispersion was mixed uniformly with 100 g of cooked polished rice (boiled in an electric rice cooker in the conventional manner). Then the mixture was shaped by filling it uniformly in a heat-resistant plastic mold having a diameter of 9 cm and a thickness of 1.5 cm. The mixture in the mold was heated in a microwave oven (Matsushita Electric Industrial model NE-6330, 600 W) for 2 minutes, whereby grains of rice were bound together to give a rice-based shaped food having the above shape and size.

Then, two pieces of the same shaped rice food as above were prepared and meat patty and vegetables were sandwiched between the pieces to give a "rice burger". Since grains of rice had been bound together to a proper extent, this product showed a sufficient consistency when taken up by the hand for eating and, when bitten, grains of rice were unbound to the desirable degree and that texture of rice proper was felt.

On the other hand, the corresponding rice burger made by using cooked rice without addition of the curdlan was readily broken into pieces and was difficult to eat.

Example 2

A uniform dispersion of 1 g of the curdlan in 15 ml of water was added to 100 g of chaofan rice (containing green peas) cooked in the conventional manner. After uniform admixture, the mixture was shaped in the same manner as in Example 1 and then heated in the microwave oven. A plate-shaped chaofan rice shaping was obtained without destruction of grians of rice but with grains of rice bound firmly to one another. Example 3

The procedure of Example 2 was followed except that the chaofan rice mixture was shaped into a bar having a dimaeter of 2 cm. Grains of rice were not destroyed but bound together firmly to give a chaofan rice shaping.

Example 4

Sushi rice (100 g) was supplemented with an adequate amount each of green peas (5 g) and orange juice sacs (5 g) and further with a unifrom dispersion of 1 g of the curdlan in 13 ml of water, followed by mingling uniformly. The thus-obtained mixture was shaped and heated in the microwave oven in the same manner as in Example 1. Grains of rice, green peas and orange were not destroyed by the procedure but bound together firmly but softly to give a colorful sushi rice plate.

Example 5

The procedure of Example 2 was followed except that barley-rice cooked in the conventional manner was used, to give a barley-rice plate in which barley-rice grains had been bound together firmly but softly.

Example 6

Sushi rice (200 g) was added to a uniform dispersion of 1.5 g of the curdlan in 25 ml of water, followed by mingling uniformly. The thus-obtained mixture was shaped into a square plate having a thickness of 5 mm. The plate was heated in the microwave oven for 2 minutes to give a sushi rice plate in which grains of rice had been bound together firmly but softly. This sushi rice plate can be used as a material in making hand-rolled sushi by rolling it around tuna and shiitake mushroom slices, etc.

Example 7

A uniform dispersion of 5 g of the curdlan in 40 ml of water was added to 100 g of boiled peas. After mingling, the uniform mixture obtained was shaped into a plate having a thickness of 5 mm and heated in the microwave oven for 2 minutes. A peas plate was obtained with peas bound together firmly.

The shaped cereal food according to the invention is characterized in that it has a certain desired shape and size with cereal grains or granules being bound together by means of a curdlan. Since the binding among cereal grains or granules is proper and adequate, the shaped food is not deformed or broken when conveyed or when taken up by the hand for eating. Furthermore, it retains the cereal food-like texture and can be sued as a snack food or a material therefor. Such particular effects can be produced by the use of a curdlan; such effects can never be produced by the use of other polysaccharides, for example starch.

Example 8

In 19 ml of water was dispersed 1g of curdlan, and the aqueous dispersion was mixed uniformly with 100g of cooked polished rice (boiled in an electric rice cooker in the conventional manner). Then 100g of the mixture was filled in a plastic vessel having a diameter of 130 mm and shaped by pressing to 7 mm in a thickness. The shaped mixture was heated in a microwave oven (Hitachi Heat, Hitachi Toaster Range MR-T500, 500W) for 4 minutes, and further heated on the hot plate at 180°C for 4 minutes, whereby grains of rice were bound together to give a rice-based shaped food having the above shape and size.

Example 9

Grains of cooked corn were cut in a size of 2 to 3 mm. The curdlan (4g) was mixed uniformly with 20g of water, 4g of potato starch and 2.5g of seasoning. The obtained mixture (80g) was shaped by filling into a heat-resistant plastic mold (130mm x 110mm x 5mm). The shaped material was heated in a steamer at 85°C for 10 minutes and after cooling took out from the mold to give a shaped corn product. This had a good texture with corn granules bound together properly.

## Claims

1. A shaped food, which comprises shaping and binding granules of cereal food with a curdlan.

2. The shaped food according to claim 1, wherein, the granules are foods prepared from cereals, seeds or stones, or pulse.

3. The shaped food according to claim 1, wherein the cereals are rice, barley, wheat, millet, foxtail millet and corn.

4. The shaped food according to claim 2, wherein the pulse are soybeans, aduki beans, peas and broad beans.

5. The shaped food according to claim 1, wherein the curdlan is contained in an amount of 0.2 to 10% by weight based on the final product.

6. A method of producing shaped foods, which comprises mixing a curdlan with granules of a cereal food, shaping the mixture and heating the shaped material for binding cereal grains or granules.

7. The method according to claim 6, wherein the curdlan is mixing in the form of an about 2 to 14% by weight aqueous dispersion.

8. The method according to claim 6, wherein the curdlan is mixed in an amount of 0.2 to 10% by weight based on the final product.

9. The method according to claim 6, wherein the mixture is shaped into a size having a thickness of about 2 to 60 mm.

10. The method according to claim 6, wherein the shaped material is heated above about 55°C.

11. The method according to claim 6, wherein the heating is carried out by the use of mixrowave oven.